# EUROPEAN PATENT APPLICATION

(11) **EP 4 763 345 A1**
(43) Date of publication of application: **24.06.2026**
(21) Application number: 24220652.2
(22) Date of filing: 17.12.2024
(51) Int. Cl.: B05B 11/00, B05B 11/02, B65D 83/48, B65D 83/62, B67D 7/02, F16L 37/44, B65D 47/24

(54) **VALVE ASSEMBLY AND METHOD FOR OPERATING THE SAME**

(71) Applicant: The Procter & Gamble Company, Cincinnati, OH 45202 (US)
(72) Inventor: DE WILDE, Vincent Hubert Monique, 1853 Strombeek-Bever (BE); HOEFTE, Paulus Antonius Augustinus, 1853 Strombeek-Bever (BE)
(74) Representative: P&G Patent Belgium UK

(57) **Abstract**

A valve assembly (1) comprising: a valve obturator (2) having a housing (22) configured to receive a nozzle head (60), wherein the valve obturator (2) is configured to move from a closed position to an open position upon application, by the nozzle head (60) received in the housing (22), of a first force oriented in a first direction; the valve obturator (2) having at least one locking tab (24), wherein the valve obturator (2) is configured to move from the open position to the closed position upon application, by the nozzle head (60) received in the housing (22), of a second force (F2) on the at least one locking tab (24), the second force (F2) being oriented in a second direction opposite the first direction.

## Description

### BACKGROUND

This disclosure relates to a valve assembly aiming at establishing or interrupting fluid communication between two devices.

Various valve systems are known for allowing a fluid to flow from a first device to a second device. Most valve systems are complex to use, are costly to produce or lack reliability. In addition, most valve systems are cumbersome to recycle for they are composed of several elements made of distinct materials (e.g. metal spring, a copper body, plastic washers, ceramic valve seats, electronic sensors, silicon components, rubber features, thermoplastic elastomers, etc.). Additionally, typical plastic springs used in conventional valves lose their spring back/elasticity properties due to creep when kept under tension for a long time. This results in the valve leaking when it is closed after having been open for a long period of time. There is therefore a need for an environmentally-friendly, cost-efficient, reliable valve assembly.

### BRIEF DESCRIPTION OF THE DRAWINGS

FIG. 1 illustrates an exploded view an example of a connecting kit.
FIG. 2 shows an example of a valve assembly in a closed position.
FIG. 3 shows an example of a valve assembly in a closed position receiving a nozzle head and making a leak tight connection.
FIGS. 4 to 7 show various successive states of the valve assembly.
FIG. 8 illustrates an isometric view of an example valve obturator.
FIG. 9 shows a flow chart of an example method of operating the valve assembly.

### DETAILED DESCRIPTION

The present disclosure pertains to a valve assembly comprising: an axis defining a proximal direction and a distal direction opposite the proximal direction; a valve holder comprising a valve seat comprising a tapered surface, the tapered surface being narrower in the proximal direction and the tapered surface being wider in the distal direction; and a valve obturator engaged in the valve seat and reversibly movable between a closed position and an open position, the valve obturator comprising: a housing configured to receive a nozzle head; an abutment surface, wherein the valve obturator is configured to move from the closed position to the open position upon application, by the nozzle head received in the housing, of a first force on the abutment surface, the first force being oriented in the proximal direction; and at least one locking tab contacting the tapered surface as the valve obturator is in the closed position, wherein the valve obturator is configured to move from the open position to the closed position upon application, by the nozzle head received in the housing, of a second force on the at least one locking tab, the second force being oriented in the distal direction.

The valve assembly cooperates with a nozzle head such that a simple one-direction movement of the nozzle head in the proximal direction allows to move the valve obturator into the open position by disengaging the locking tabs from the tapered surface of the seat. Likewise, a simple one-direction movement of the nozzle head in the distal direction pulls the valve obturator back into the closed position. The valve assembly is therefore easy to operate and the overall design of the valve assembly enables a high degree of recyclability: in absence of springs, sensor or electronics, silicone, rubber, TPE, metal, ceramic, copper, etc., the valve assembly may effectively be made of two pieces only, the valve holder and the valve obturator, and the valve assembly can therefore be conveniently recycled.

The "one-direction" translation movement mentioned above does not exclude the possibility to furthermore rotate the nozzle with respect to the valve obturator or holder. In a variant, the movement may be a helical movement. Likewise, the closed and open positions may differ axially and/or rotationally.

Beyond the functionality of the tapered surface engaging the locking tabs, this tapering facilitates macro to micro alignment of the nozzle with the valve.

It is to be noted that the orientation of the first and/or second force is arbitrarily depicted here and they may be expressed differently (third law of Newton): a similar effect is achieved when the first force (the one that opens the valve) is a force in the distal direction applied by the abutment surface on the nozzle head, and when the second force (the one that closes the valve) is in the proximal direction and is applied by the locking tab on the nozzle head.

The valve holder may be attached to or may be part of a first device, e.g. a fluid source, or respectively a fluid receiver. The nozzle head may be attached to or may be a part of a second device, e.g. a fluid receiver, or respectively a fluid source.

Each of the first and second device may be one of: a storage container; a dispensing device; a pipe or a machine, intended to receive or provide fluid to the other of the first and second device.

Non-limiting examples of machines which could be used with the present valve assembly are: printers, vehicle motors, coffee machines, cooking robots, gardening systems, beverage bottling or treating machines, medical machines, etc.

Non limiting examples of dispensing devices that could be used with this valve assembly are mechanical or electrical triggersprayers (actuated by translation and/or rotational trigger), mechanical or electrical dosing pumps, measuring pumps, mechanical actuators, foam pumps, squeeze dosers, squeeze sprayers and squeeze foamers, liquid recharge systems for durables, medical/medicinal fluid dispensing or pumping machines, in store (re)filling machines, at-home liquid-dispensing machines, industrial filling machines for flexible packaging, floor cleaning devices, window and other surface cleaning devices, haircare dispensing devices, male or female shaving or grooming devices, scent dispensing devices, etc.

The fluid may contain a liquid, such as water, ink, paint, alcoholic or non-alcoholic beverage, gasoline or petrol, bodily fluid, detergents, bleaches, pre-treaters, surface care products, dishwashing fluids, fabric enhancers, haircare and body care products, perfumes or other scent products, etc. In addition, or alternatively, the fluid may contain a vapor, a liquefied gas, a compressed gas, such as CO₂, helium, hydrogen, propane, butane, isobutane (etc.), pressurized air, hydrocarbons, nitrogen, and the like. In addition, or alternatively, the fluid may contain a powder or a granulate material, such as cereals, flour, cement, gravel, cosmetics, etc. In addition, or alternatively, the fluid may contain a foam (e.g. shaving foam, comestible foam, detergent foam, etc.).

In some examples, the valve assembly can be used in combination with a ventless flexible container.

In some examples, the valve assembly can be used in combination with a push-pull cap, so that a user (e.g. a mouth of a user) may open/close the valve and access to the fluid (e.g. sportsdrink).

For propelling the fluid from the first device to the second device, once the valve assembly is open, the fluid may be under pressure in the first or second device, and/or a vacuum may be generated in the first or second device. The dispense of the fluid may alternatively or in combination result from any external force (e.g. gravity, electromagnetic force, a user squeezing a flexible body containing the fluid in one of the first/second devices, etc.)

As the opening and closing of the valve results from a relative movement of the nozzle head with respect to the valve holder, the nozzle head may be actuated while the valve holder is remaining immobile, or vice versa as the nozzle head remains immobile. Alternatively, both the nozzle head and the valve holder may move linearly towards or away from each other to operate the valve.

In some examples, the valve obturator and the valve holder are made of a same material, preferably a polymer material, more preferably polyethylene or polypropylene, or PET, with a range of post-consumer recycled material, PCR, comprised between 0 and 100%. This aspect further increases the recyclability of the valve assembly. In some examples, the valve assembly and a flexible container body attached to the valve assembly are made of a same polymer material to facilitate recycling the valve assembly together with the flexible container body.

In some examples, the at least one locking tab is configured to assume a radially outward resting position as the valve obturator is in the closed position, enabling the nozzle head moving in the distal direction to be released; and the at least one locking tab is configured to assume a radially inward pre-stressed position as the valve obturator is in the open position. This further increases the reliability of the valve assembly as the natural spring effect of the locking tabs assist the closure of the valve, ensuring an absence of leakage as the valve obturator is in the closed position. This design also helps preventing inadvertent opening of the valve (by fingers, or external shocks or impacts) during manufacturing, storage, transport, or at home. The valve can only switch to its open state when it is engaged with an appropriately dimensioned counterpart (nozzle head) and when a sufficient force is applied, overcoming the friction caused by the locking tabs against the valve holder tapered wall.

In some examples, the at least one locking tab is configured such that, as the nozzle head pushes the abutment surface, the at least one locking tab bends radially inwardly, progressively contacting an outer surface of the nozzle head and a central portion of the valve seat. By bending the locking tabs on the nozzle head when the nozzle head engages the valve, leakage that could happen at the periphery of the nozzle head as the valve obturator is in the open position is prevented or reduced. This design thus participates in making the valve assembly reliable.

In some examples, the at least one locking tab comprises an inner coupling element configured to progressively engage an outer coupling element of the nozzle head as the valve obturator moves from the closed position to the open position. The inner coupling element may be a rig or respectively a groove. The outer coupling element may be a groove or respectively a rib. The inner coupling element and the outer coupling element may have a complementary shape to provide a leak tight arrangement as the valve obturator is in the open position.

In some examples, the groove/rib may be a thread: the nozzle may comprise an external thread whereas the locking tabs comprise an inner thread of shape matching the external thread. The inner thread may be segmented as the locking tabs may be distant from each other, separated by respective gaps. With that design, the relative movement between the nozzle and the valve holder may be a helical movement, i.e., combining an axial translation with a circumferential rotation. This embodiment may provide the valve assembly with a precise opening for regulating the fluid flow rate.

In some examples, the valve seat has a front section comprising the tapered surface, a central section comprising a substantially cylindrical surface and a rear section comprising a tapered cantilevered ring. This arrangement is particularly advantageous for firmly holding the valve obturator in the valve seat.

In some examples, the at least one locking tab comprises an annular row of two or more locking tabs, circumferentially distant from each other. This design provides a good mechanical balance and a reliable positioning of the valve obturator in the closed position. It also provides the desired friction between the obturator and the valve holder to prevent unintentional opening.

In some examples, the valve obturator comprises a central channel extending from the abutment surface to at least one peripheral aperture. This configuration participates in making the valve assembly reliable, as the relative position of the valve obturator may be the only parameter ruling the state (open/closed) of the valve.

In some examples, the valve obturator is snapped in the valve holder. This is beneficial both for manufacturing the valve assembly and for dismounting the valve assembly for maintenance or recycling. For example, a same valve holder may be suited to hold distinct shapes of valve obturator, depending on the desired application or nature of the fluid to be used, or on the desired flow rate of fluid when the valve is open (bigger or smaller conduit/apertures). The valve obturator may be snapped in by a translation in the proximal direction.

In some examples, the valve obturator comprises at least one stopper at one axial end thereof opposite the locking tab, the at least one stopper abutting against a cantilevered ring of the valve holder as the valve obturator is in the closed position. This arrangement prevents the valve obturator from exiting the valve seat in use, e.g. as it is being pulled by the nozzle head, thereby participating in the reliability of the valve assembly. This means that the resistance force created by the stopper is greater than the frictions occurring as the nozzle withdraws the valve obturator back to the closed position and disengages from the locking tabs. In some variants, the stopper preventing the escape of the valve can be formed by a flange of the valve holder at a distal side of the valve holder and the locking tabs in their resting (radially expanded) position (or other parts of the valve obturator) can abut against such a flange as the nozzle head withdraws from contact with the valve obturator.

In some examples, the cantilevered ring is tapered inwardly and applies a radial force on an external surface of the valve obturator. This is again beneficial for reliably controlling the positioning and the movement of the valve obturator.

In some examples, the valve obturator comprises an annular external sealing rib. This further improves the leak tight property of the valve assembly. In some cases, more than one external sealing rib can be foreseen.

The present disclosure may also relate to a connecting kit comprising the valve assembly described above and a nozzle head configured to cooperate with the valve obturator. Such a connecting kit combines the function of a mechanical connector and a fluid connector (valve). In existing connectors between two devices, the mechanical connector (for example male/female attachment) is usually independent from the opening/closing of a valve allowing fluid to flow from one device to the other device. The present connector shows the benefit of a simple and reliable design.

In some examples, the valve obturator comprises a central channel extending from the abutment surface and the nozzle head comprises a conduit, the central channel and the conduit having substantially a same diameter, the central channel and the conduit being aligned along the axis.

In some examples, the valve assembly may comprise an identifier (e.g. NFC, RFID tag, etc.) adapted to interact, wirelessly or through electric contact, with the nozzle head or with the device comprising the nozzle head, or with a remote server, an app on a smartphone or the like. The identifier may be any of: NFC, RFID tag, 2D or 3D barcode, EAN code, microchip. The identifier may be read by the second device connected or comprising the nozzle. When used in conjunction with a container, the identifier may be used to read/write content or level of fluid in the container, as well as identifying the fluid, traceability, expiration date, etc. A user may be prompted a warning when an amount of a fluid in the container falls below a predetermined threshold. The identifier can be used for automatic or semi-automatic order of a new container.

The present disclosure may also relate to a method for operating the valve assembly as discussed above. The method comprises: providing a nozzle head in the vicinity of a valve assembly; performing a relative displacement between the nozzle head and the valve holder so as to make the nozzle head enter the housing of the valve assembly and make a leak tight connection between the nozzle head and the valve obturator; performing a further relative displacement so that the nozzle head pushes on the abutment surface of the valve assembly or the abutment surface of the valve assembly pushes on the nozzle head, until the valve obturator is moved into the open position; and dispensing a fluid from a first device comprising or attached to the valve holder, to the nozzle head through a central channel of the valve obturator and through a conduit of the nozzle head; or dispensing a fluid from a second device comprising or attached to the nozzle head, to the first device through a conduit of the nozzle head and through a central channel of the valve obturator.

The (initial) relative displacement enables to make a leak tight connection between the nozzle head and the valve obturator before opening the valve, while the further relative displacement actually opens the valve.

In some examples, distinct valve obturators can be used in the same valve holder, wherein the central channel of these distinct valve obturators differ, such that the valve assembly is adapted to a specific fluid rheology or desired flow rate.

Similarly, the use of a nozzle head with a predetermined inner diameter may help obtain a desired flow rate.

In some examples, the method further comprises: interrupting dispensing a fluid by performing a relative displacement pulling the valve holder away from the nozzle head or vice versa, until the valve obturator reaches the closed position . This is done while still maintaining a liquid tight connection between the nozzle head and the obturator. The method may then further comprise safely disconnecting the nozzle head from the valve assembly by performing a further linear (and optionally rotational) pulling motion, thereby disengaging the locking tabs from the outer coupling element of the nozzle head.

### Detailed description of the figures

The figures present various aspects of a valve assembly. Each distinct aspect presented in one of the figures can be combined with aspects presented in other figures, unless the present document explicitly excludes such combination.

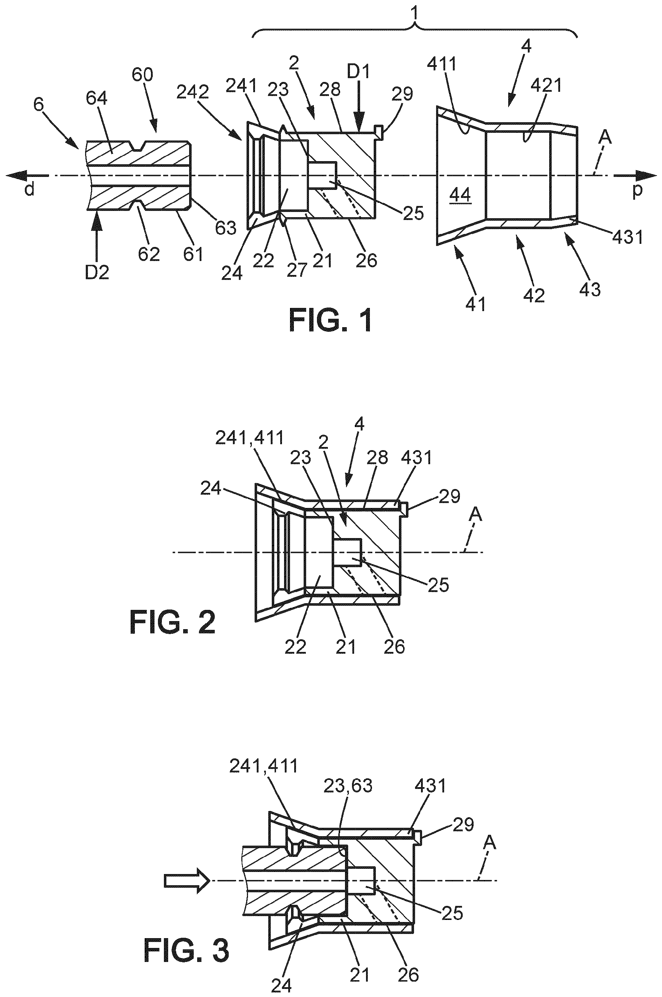

FIG. 1 illustrates an exploded view of kit comprising a valve assembly 1 and a nozzle 6 having a nozzle head 60. The valve assembly is essentially made of two parts, a valve obturator 2 and a valve holder 4. As will be apparent in the description below, the valve obturator 2 is movably received in the valve holder 4.

The valve holder 4 may be a sub-component of a first device (not shown). The valve holder 4 may be integrally made with the first device. The valve holder may be welded, glued, clamped or sealed to the first device. In some examples, the first device may be a flexible bag, sachet or pouch, or collapsible or delaminating bottle, or other non-venting collapsing structures. The first device may contain a piston with a plunger.

In some examples, the first device is ventless, i.e. is void of a venting mechanism. A flexible body attached to the valve assembly can be deformed without the need to compensate with an air intake (when the flexible body is being emptied) or with an air outlet (when the flexible body is being filled in). Such an airless system is advantageous as it simplifies the design (no need for an air inlet/outlet), it avoids air from interacting with the content in the flexible body (oxidation or other chemical reactions are avoided), and it enables to use the valve assembly and flexible body in a humid or sealed environment, where pure air is not immediately available in the surroundings. Contamination is prevented and longevity of the valve assembly and flexible body improved. Air or fluid is not subj ect to leakage through an air venting valve. Volume variations due to temperature changes (collapse, expansion) are prevented as well, which is beneficial for transport, storage, trade or use. The absence of air also enables use of the valve assembly in any orientation without needing dip-tubes and the like. This offers some versatility for the choice of orientation of the first device.

The nozzle 6 may be a sub-component of a second device (not shown). The nozzle 6 may be integrally made with the second device. The nozzle head 60 is an end portion of the nozzle 6, aimed at cooperating with the valve obturator 2. For instance, the nozzle can be part of a triggersprayer or mechanical pump or other mechanical or automatic dosing or dispensing device. When this second device is mounted onto the first device, the valve is actuated by the nozzle. This cooperation between the first and second devices may be done by an action of snapping, pushing, screwing, sliding, or via a bayonet fitting and the like.

The valve assembly 1 is centered on an axis A which defines a proximal direction (towards label p) and a distal direction (towards label d). The axis A defines a cylindrical coordinate system. The axial direction is parallel to axis A. The radial direction is perpendicular to the axis A. In the present disclosure, the terms radially inner, radially outer, radially inward or radially outward, refer to a radial direction towards the axis A or away from this axis. The circumferential or tangential direction is perpendicular to the axis A and to the radial direction.

The valve obturator 2 comprises an obturator body 21 which is substantially symmetric around axis A. The diameter D1 of the obturator body 21 may be comprised between 3 mm and 300 mm, preferably between 5 mm and 20 mm.

The overall length of the valve obturator 2 may be comprised between 5 mm and 500 mm, preferably between 10 mm and 50 mm, more preferably between 12 mm and 14 mm.

The obturator body 21 comprises a housing 22 which can be a recess having a cylindrical shape. The housing 22 has a diameter that is smaller than the diameter of the obturator body 21. For example, the diameter of the housing 22 may be of less than 90% of the diameter of the obturator body 21. The diameter of the housing 22 may be comprised between 2 mm and 270 mm, preferably between 3 mm and 15 mm. As explained below, the housing 22 is intended to receive a nozzle head 60 which may have a substantially similar diameter. A bead can be provided in the housing 22 to reduce friction between the nozzle head 60 and the cylindrical surface of the housing 22.

In some examples, the housing 22 does not have a circular profile (seen perpendicularly to axis A) but another profile such as, for example, a hexagonal profile or a gear-like profile (i.e. the housing has internal axial grooves). The housing 22 may also have a specific lock-and-key shape to cooperate with the nozzle head 60 having a corresponding shape.

The housing 22 may have a length in the axial direction that is less than half of, preferably less than a third of, the length of the obturator 2. The axial length of the housing 22 may be comprised between 2 mm and 5 cm, preferably between 4 mm and 20 mm, more preferably about 5 mm.

The housing 22 is delimited by an abutment surface 23. The abutment surface 23 may be substantially planar and may extend perpendicularly to the axis A.

The obturator 2 further comprises at least one locking tab 24 extending in the distal direction from the obturator body 21. In some examples, the at least one locking tab 24 is constituted by an annular row of locking tabs 24, or in other words a series of locking tabs 24 distributed circumferentially along a distal edge of the obturator body 21. The locking tabs 24 may be separated from one another by a circumferential gap.

On FIG. 1, the locking tabs 24 are shown in their resting position. As will be apparent below, the locking tabs 24 are flexible and they can bend radially inwardly before reverting to their resting position.

Each locking tab 24 comprises a radially outer surface 241. The radially outer surface 241 may be substantially frustoconical. In the resting position of the locking tab 24, the radially outer surface 241 may form an angle that is comprised between 10° and 80° with respect to the axis A. In preferred embodiments, this angle is comprised between 15° and 45°, more preferably between 20° and 30°.

In some examples, the outer surface 241 of the locking tab 24 may not be a portion of a cone and may have a more complex profile, for instance with a wavy surface. This could be advantageous to increase the stability or flexibility of the locking tab 24 in the resting position.

In examples, as will be apparent in the description below, the outer surface 241 has a profile (in the cross-section of FIG. 1) which mirrors the profile of a tapered surface of the valve holder 4.

Each locking tab 24 further comprises an inner coupling element 242. In the example shown on FIG. 1, the inner coupling element 242 is a rib. In a variant example, the inner coupling element 242 comprises more than one rib, for example two ribs distant from one another in the axial direction, or distant from one another in the circumferential direction. In a variant, the inner coupling element 242 is at least one groove. In yet another variant, the inner coupling element 242 may be an inner thread. The rib 242 may be chamfered, i.e. having a front inclined surface. The front inclined surface can be inclined with respect to the axis A of an angled comprised between 60° and 80°. This can help alignment with the nozzle head. In some examples, the locking tabs may have a shape of a hook, to offer a higher friction when cooperating with the nozzle head.

As explained below, the inner coupling element 242 is intended to mirror the shape of an outer coupling element of a nozzle head 60.

The valve obturator 2 further comprises a central channel 25 extending from the abutment surface 23 to at least one peripheral aperture 26. As will be described below, when the obturator 2 is in the closed position, the peripheral aperture(s) 26 is/are obturated, thereby preventing fluid from passing through the central channel 25.

The valve obturator 2 comprises an annular external sealing rib 27 protruding from an external surface 28 of the obturator 2. The annular external sealing rib 27 is aimed at cooperating with the valve seat of the valve holder 4. In some examples, there may be more than one annular external sealing rib 27.

The valve obturator 2 may comprise at least one stopper 29 at an axial end opposite the locking tab 24. The stopper 29 may be a L-shape latch that extends from the obturator body 21 at an axial end thereof opposite the locking tabs 24. As will be explained below, the stopper 29 abuts against a cantilevered ring 431 of the valve holder 4 as the valve obturator 2 is in the closed position. Similar to the locking tabs 24, the valve obturator 2 may comprise an annular row of stoppers 29, i.e., a series of circumferentially arranged and distanced stoppers 29.

In use, the valve obturator 2 is held in a valve holder 4. The valve obturator 2 may be snapped in the valve holder 4 before first use, or during the manufacturing process of the valve assembly 1. This may be done by inserting the valve obturator 2 in the proximal direction in the valve holder 4. At some point, the stopper 29 may deform the cantilevered ring 431 until the stopper 29 has passed the ring. The cantilevered ring 431 then flexes inwardly and prevents any movement of the valve obturator 2 in the distal direction. The stopper 29 may be chamfered to facilitate the insertion in the proximal direction.

The valve obturator 2 and the valve holder 4 may be made of a same material, preferably a polymer material, more preferably polyethylene or polypropylene.

The valve holder 4 may be a sub-component of a first device intended as a source or as a recipient of a fluid. The valve holder 4 may alternatively be attached to such a device.

In some examples, an external surface of the valve holder 4 may be textured (ribs, protrusions, etc.) to assist a leak tight weld/seal with a bottle or a (flexible) container or film. The external surface may form an eye-shaped port that can be conveniently welded/sealed with a bottle or a flexible container such as a pouch, a sachet or a flexible film.

The valve holder 4 may have a neck or other shapes that facilitates handling the valve holder 4, for example during manufacturing (for assembling the valve obturator 2 therein, or for welding a film on the valve holder 4) or during (re)filling/emptying operations.

The valve holder 4 may comprise, from distal side to proximal side: a front section 41, a central section 42 and a rear section 43. The valve holder 4 may have a generally tubular or sleeve-like shape. The outer diameter of the valve holder 4 may be comprised between 4 mm and 350 mm, preferably between 6 mm and 25 mm. The overall length of the valve holder 4 may substantially match the length of the valve obturator and/or may be comprised between 5 mm and 500 mm, preferably between 10 mm and 50 mm, more preferably between 12 mm and 14 mm.

The inner surface of the valve holder 4 constitutes a valve seat 44 for the valve obturator 2, i.e., the obturator 2 is retained in the valve holder 4.

The front section 41 may be generally tapered outwards in the distal direction. The front section 41 comprises a tapered surface 411, the tapered surface 411 being narrower in the proximal direction and wider in the distal direction.

The tapered surface 411 is intended to contact the outer surface 241 of the locking tab(s) 24 when the valve obturator 2 is in the closed position. The tapered surface 411 also facilitates assembly when inserting the valve obturator into the valve holder.

The inclination of the tapered surface 411 with respect to the axis A may be equal to or less than the angle of the outer surface 241 of the locking tabs 24 in the resting position. Hence, the tapered surface 411 may be inclined with respect to axis A of an angle comprised between 10° and 80° with respect to the axis A. In preferred embodiments, this angle is comprised between 15° and 45°, more preferably between 20° and 30°. In some examples, this angle is at least 1° or at least 2° or at least 5° less than the angle that the outer surface 241 forms with the axis A in the resting position of the locking tabs 24. This difference in angle may ensure that the locking tabs 24 apply a locking pressure on the tapered surface 411.

The central section 42 of the valve holder 4 is substantially cylindrical and may face and/or contact the outer surface 28 of the valve obturator 2. As the valve obturator 2 is in the closed position, the peripheral apertures 26 of the obturator body 21 are obturated by the inner surface 421 of the central section 42.

The rear section 43 comprises a ring 431 with an inner surface that is tapered inwardly. The ring 431 may be considered as cantilevered with respect to the central section 42 and with respect to any part that is attached to the valve holder 4. Indeed, the cantilevered ring 431 must in this example be free to bend radially outwardly when the valve obturator 2 is snapped in the valve holder 4 in particular to let the stopper 29 pass in the proximal direction when assembling the valve assembly 1. In use, when the valve obturator 2 is in the closed position, the stopper 29 abuts axially against the cantilevered ring 431.

The valve assembly 1 is configured to cooperate with a nozzle head 60. The nozzle head 60 is an axial end portion of a nozzle 6. The nozzle 6 may be part of or may be connected to a second device acting as a fluid source or a fluid receiver.

As explained below, the nozzle head 60 is movable relative to the valve holder in the axial direction.

The nozzle head 60 comprises a generally tubular shape, with an external surface 61 having a diameter noted D2. The diameter D2 is substantially equal to the diameter of the housing 22. In some variant examples, the housing 22 does not have a cylindrical shape (e.g. gear-like profile or notches, polygonal cross-section, etc.) and the external surface 61 of the nozzle head 60 has a shape that is complementary to the shape of the housing 22.

An outer coupling element 62, here represented as a groove, is aimed at cooperating with the rib 242 of the locking tab(s) 24. In a variant example, the outer coupling element 62 is a rib and the inner coupling element 242 of the locking tab 24 is a groove. In yet another example, the coupling elements may be an inner and an outer thread. In such a case, the relative movement of the nozzle head 60 and the valve holder 4 to open or close the valve assembly 1 may include a rotation around axis A in addition to the translation along axis A.

The axial distance between a proximal surface 63 of the nozzle head 60 and the outer coupling element 62 is substantially equal to the axial distance between the abutment surface 23 and the inner coupling element 242, such that, as the proximal surface 63 contacts the abutment surface 23, the inner coupling element 242 engages the outer coupling element 62.

The radial width of the locking tabs 24 is greater than the radial thickness between the housing 22 and the external surface 28 of the body 21. Thus, it is necessary for the locking tabs 24 to engage the groove 62 before they can bend inwardly under contact with the surface 421.

The nozzle head 60 comprises a conduit 64 that is open on the proximal surface 63. The fluid may flow from the nozzle head 60 to the valve obturator 2 (or vice versa) through the conduit 64. The conduit 64 may have a diameter that is substantially equal to the diameter of the central channel 26 of the valve obturator 2. The central channel 26 and/or the conduit 64 may comprise a one-way valve mechanism preventing back pressure or leakage when decoupling the nozzle head 60 from the valve assembly 1. The central channel 26 and/or the conduit 64 may be equipped with a magnetic or electro-valve (not shown) that can be configured to allow or stop the flow of fluid under control of an electrical pulse. The electrical pulse may be triggered by the second device (the device comprising or connected to the nozzle) or may result from detection by probes or sensors triggering or stopping the release of fluid.

FIG. 2 shows the valve assembly 1 in the closed configuration. In that configuration, the valve obturator 2 seats in the closed position, where the outer surface 241 of the locking tabs 24 contacts the tapered surface 411 of the valve holder 4. The inclination of the locking tabs 24 and the tapered surface 411 prevents the valve obturator 2 from inadvertently moving in the proximal direction, away from the closed position. This prevents unintentional actuation of the valve in the trade, during transport, or when handled by a consumer.

The stopper 29 may contact the cantilevered ring 431 to prevent the valve obturator 2 from inadvertently moving in the distal direction, escaping the valve holder 4.

The cantilevered ring 431 applies a radial force on the external surface 28 of the valve obturator 2, to assist further holding and/or centring the valve obturator 2 in the valve seat 44.

In the closed position shown on FIG. 2, a fluid cannot pass through the central channel 25 since the peripheral aperture 26 is closed by the body of the valve holder 4.

FIG. 3 shows the valve assembly 1 in the closed configuration. The nozzle head 60 has been introduced in the housing 22 of the valve obturator 2. The proximal surface 63 of the nozzle head 60 contacts the abutment surface 23 and makes a liquid tight connection as the valve assembly is still closed. The introduction of the nozzle head 60 in the housing 22 may result from an axial movement of the nozzle head 60 in the proximal direction, and/or from a movement of the valve holder 4 in the distal direction.

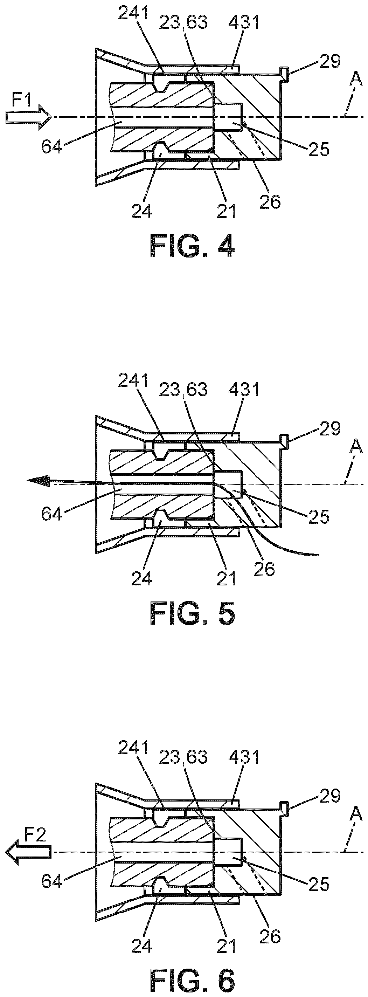

FIG. 4 shows an open configuration of the valve assembly 1. This constitutes a subsequent situation where the nozzle head 60 has been pushed further into the proximal direction and/or the valve holder 4 pushed further in the distal direction compared to the configuration illustrated in FIG. 3. This additional movement leads the locking tabs 24 to bend inwardly under the pressure of the valve seat 44 in the central section 42. The inner coupling element (rib) 242 of the locking tab 24 engages the outer coupling element (groove) 62 of the nozzle head 60. In other words, a force applied by the nozzle head 60 on the abutment surface 23 in the direction of the arrow F 1 shown on FIG. 4 made the valve obturator 2 move out of the closed position. Alternatively, or in addition, an opposite force can be applied by the abutment surface 23 on the nozzle head 60 (e.g. by moving the valve holder 4 in the distal direction).

Between the closed position of FIG. 3 and the open position of FIG. 4, the locking tabs 24 have progressively left contact with the tapered surface 411, and they have progressively joined contact with the outer surface 61 of the nozzle head 60. Also, the outer coupling element 62 progressively engages the inner coupling element 242 of the at least one locking tab 24 as the valve obturator 2 moves from the closed position to the open position.

In the open position shown on FIG. 4, the peripheral aperture 26 is no longer obturated by the body of the valve holder 4. A fluid can pass through the conduit 64, through the central channel 25 and through the peripheral aperture 26 (in one or the opposite direction).

FIG. 5 shows the same position as in FIG. 4 and an arrow illustrates the flow of fluid. In that case, the liquid flows in the distal direction. In alternative embodiments, the fluid can flow in the proximal direction.

The size or shape of the peripheral aperture 26 can be chosen to obtain a given fluid flowrate.

It is important to note that there may be more than one open positions, i.e. depending on the cross section of the aperture 26 that is actually accessible by the fluid. The relative axial position of the nozzle can regulate the flow rate.

In order to revert the valve assembly 1 to the closed position, a force can be applied by pulling the nozzle head 60 as shown on the arrow F2 on FIG. 6. Alternatively or in addition, an opposite force can be applied by the locking tabs 24 on the nozzle head 60 (e.g. by pulling the valve holder 4 in the proximal direction).

Once the nozzle head 60 has been pulled out, the stopper 29 contacts the valve holder 4 and limits the movement of the valve obturator 2 in the distal direction. The locking tabs 24 move radially outwardly to elastically retrieve their resting position in contact with the tapered surface 411. Indeed, in the front section 41, the locking tabs get the freedom to move radially outwards while the nozzle head 60 is pull out to disconnect the system. The outward movement of the locking tabs 24 releases the outer coupling element and allows the nozzle head 60 to be withdrawn out of the housing 22.

It is important to note that the movement of the obturator from the closed position to the open position, as well as the movement from the open position to the closed position, happen as the nozzle head 60 is received in the housing 22. In other words, the portion of the nozzle 6 from the outer coupling element 62 to the proximal surface 63 is and remains in the housing 22 of the valve obturator 2 from the moment when the valve obturator 2 starts to switch out of its closed position, and until the moment the valve obturator 2 is back into the closed position. This means that extracting the nozzle head 60 from the housing 22 can only be made when the valve obturator 2 is in the closed position. This also means that pulling out the nozzle head 60 with the intention to disconnect the nozzle head 60 from the valve assembly 1 results in the closure of the valve assembly 1. This is particularly beneficial for preventing or reducing leakage and for making simple the handling of the valve assembly 1.

After the nozzle head 60 has been entirely pulled out, the valve assembly 1 retrieves the same configuration as shown on FIG. 2.

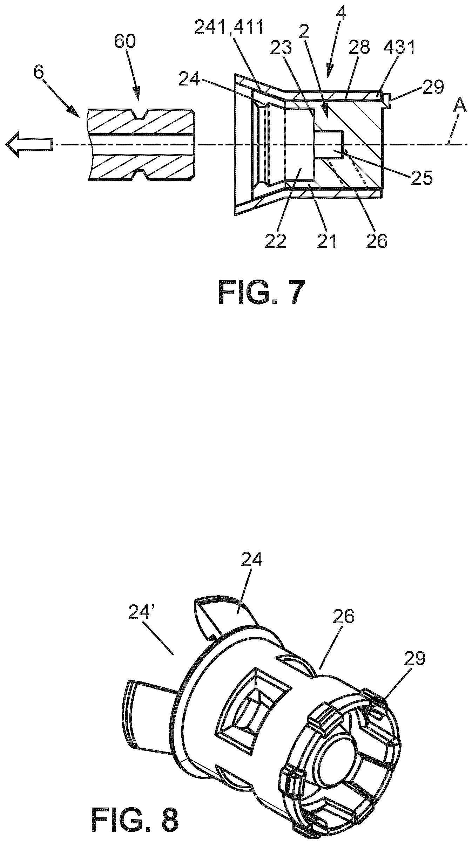

FIG. 7 illustrates the nozzle head 60 completely pulled out of the valve obturator 2.

The overall travel of the valve obturator 2 in the valve holder 4 from the closed position to the open position may be comprised between 2 mm and 50 mm, preferably between 5 mm and 20 mm, more preferably between 10 mm and 12 mm.

In summary, the opening and closing of the valve may be obtained by a simple axial movement of the two respective parts: nozzle head and valve holder. Depending on the application intended for the present valve assembly, the relative movement between the valve holder and the nozzle head may be operated by hand, or may be at least partly automated by means of an actuator such as a piston, a linear motor, a magnet embedded in the nozzle head or valve holder, a mechanical lever, etc. In some variant examples, the actuation of the valve may be operated by screwing an external pump or triggersprayer on the valve assembly. Releasing/closing the valve assembly may be obtained with the same or a different actuator (i.e., mechanical lever, pressing a spring-loaded push button, by an electrical actuator or the like, or by unscrewing a pump or trigger sprayer from the valve assembly). As explained above in the presence of a thread, in some examples the relative movement may be a combination of an axial movement and of a rotation.

FIG. 8 shows an isometric view of an example valve obturator 2. One can see that the locking tabs 24 may be arranged as an annular row of tabs 24, separated from one another by a circumferential gap 24'. In this example, there are four locking tabs 24 evenly distributed in the circumferential direction.

The size and number of locking tabs may be adapted to ensure a predetermined resistance to the movement of the valve obturator 2 in the valve holder 4, or feedback force when retrieving the resting position.

FIG. 8 also shows the peripheral apertures 26. In this example, there are four peripheral apertures 26. They are all fluidly connected to a single central channel 25. Other arrangements are possible without departing from the essence of the present valve assembly. For example, the nozzle head may comprise more than one conduit and the valve obturator 2 may comprise more than one central channel 25, so that several distinct fluids can be transferred from the nozzle to the valve holder 4 or vice versa.

The size, shape or number of peripheral apertures 26 may be adapted to ensure a predetermined fluid flow rate or resistance to flow.

As shown on FIG. 8, the peripheral apertures 26 and the locking tabs may be staggered / offset circumferentially. In other words, the peripheral apertures 26 may be aligned with the gaps 24' rather than with the locking tabs.

FIG. 8 also shows that the stopper 29 may be comprised of an annular row of stoppers 29. In this example, six stoppers 29 have been provided.

The size and number of stoppers may be adjusted to obtain a trade-off between the necessary force resisting to the valve holder 2 being pulled out of the valve holder 4 (in the proximal direction), yet to allow the valve obturator 2 being snapped in the valve holder 4 (in the proximal direction). The stoppers 29 may be chamfered on their proximal side to facilitate the initial insertion of the valve obturator 2 in the valve holder 4.

In the proximal side of the valve obturator 2, a recess can be provided to reduce the weight of the valve holder. This design may also result from the manufacturing of the valve obturator 2 by injection moulding.

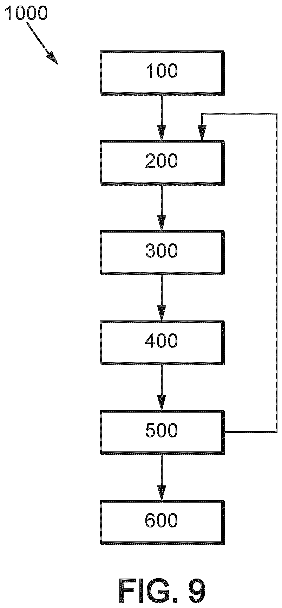

FIG. 9 shows a flowchart of a method 1000 for operating the valve assembly discussed above.

The method comprises providing 100 a nozzle head 60 in the vicinity of a valve assembly 1 as discussed above.

By default, the valve assembly 1 assumes a closed position.

The method comprises performing 200 a relative displacement between the nozzle head 60 and the valve holder 4 so as to make the nozzle head 60 enter the housing 22 of the valve assembly 1. The outcome of this method step is shown on FIG. 3, where the proximal surface 63 of the nozzle head 60 contacts the abutment surface 23 of the valve obturator 2 lying in its closed position.

Then, the method comprises a step of performing 300 a further relative displacement so that the nozzle head 60 pushes on the abutment surface 23 of the valve assembly 1 or the abutment surface 23 of the valve assembly 1 pushes on the nozzle head 60, until the valve obturator 2 is moved into the open position. The outcome of this step is shown on FIG. 4.

Then, the method comprises dispensing 400 a fluid from a first device comprising or attached to the valve holder 4, to the nozzle head 60 through a central channel 25 of the valve obturator 2 and through a conduit 64 of the nozzle head 60 (as visible on FIG. 5); or dispensing a fluid from a second device comprising or attached to the nozzle head 60, to the first device through a conduit 64 of the nozzle head 60 and through a central channel 25 of the valve obturator 2. The dispense of the fluid may result from the fluid being under pressure, or from a vacuum, or any external force (e.g. gravity, electromagnetic force, squeeze force, etc.).

The method may further comprise, once the desired amount of fluid has been transferred, interrupting 500 dispensing a fluid by performing a relative displacement pulling the valve holder 4 away from the nozzle head 60 or vice versa, until the valve obturator 2 reaches the closed position. The initial relative displacement (see FIG. 6) still maintains the arrangement leak tight, until the full closure of the valve.

When a container (as "first device" mentioned above) is connected to the valve assembly, this step of interrupting 500 may be triggered when, *in use,* the container is emptied, so that the container and valve assembly may be replaced with a replacing container and valve assembly. This step of interrupting 500 may be triggered when, *during manufacturing or refilling operation,* the container is completely filled, so that a next container and valve assembly can be processed in the filling or packing line.

Steps 200 to 500 may be repeated at will.

At some point, it may become necessary to replace the valve obturator 2 which may have worn out, or it may become necessary to recycle the valve assembly. Step 600 illustrates that step, wherein the valve obturator 2 may or may not be extracted from the valve holder 4 for further handling.

Additional benefits and alternative designs may become apparent to the person skilled in the art without departing from the intended scope of the present disclosure as recited in the appended claims.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A valve assembly (1) comprising:
an axis (A) defining a proximal direction (p) and a distal direction (d) opposite the proximal direction (p);
a valve holder (4) comprising a valve seat (44) comprising a tapered surface (411), the tapered surface (411) being narrower in the proximal direction (p) and the tapered surface (411) being wider in the distal direction (d); and
a valve obturator (2) engaged in the valve seat (44) and reversibly movable between a closed position and an open position, the valve obturator (2) comprising:
a housing (22) configured to receive a nozzle head (60);
an abutment surface (23), wherein the valve obturator (2) is configured to move from the closed position to the open position upon application, by the nozzle head (60) received in the housing (22), of a first force (F 1) on the abutment surface (23), the first force (F1) being oriented in the proximal direction (p); and
at least one locking tab (24) contacting the tapered surface (411) as the valve obturator (2) is in the closed position, wherein the valve obturator (2) is configured to move from the open position to the closed position upon application, by the nozzle head (60) received in the housing (22), of a second force (F2) on the at least one locking tab (24), the second force (F2) being oriented in the distal direction (d).

2. The valve assembly (1) of claim 1, wherein the valve obturator (2) and the valve holder (4) are made of a same material, preferably a polymer material, more preferably polyethylene or polypropylene or PET, with a range of post-consumer recycled material, PCR, comprised between 0 and 100%.

3. The valve assembly (1) of any of the preceding claims, wherein the at least one locking tab (24) is configured to assume a radially outward resting position as the valve obturator (2) is in the closed position, enabling the nozzle head (60) moving in the distal direction (d) to be released; and wherein the at least one locking tab (24) is configured to assume a radially inward pre-stressed position as the valve obturator (2) is in the open position.

4. The valve assembly (1) of any of the preceding claims, wherein the at least one locking tab (24) is configured such that, as the nozzle head (60) pushes the abutment surface (23), the at least one locking tab (24) bends radially inwardly, progressively contacting an outer surface (61) of the nozzle head (60) and a central portion (42) of the valve seat (44).

5. The valve assembly (1) of any of the preceding claims, wherein the at least one locking tab (24) comprises an inner coupling element (242) configured to progressively engage an outer coupling element (62) of the nozzle head (60) as the valve obturator (2) moves from the closed position to the open position.

6. The valve assembly (1) of any of the preceding claims, wherein the valve holder (4) has a front section (41) comprising the tapered surface (411), a central section (42) comprising a substantially cylindrical surface (421) and a rear section (43) comprising a tapered cantilevered ring (431).

7. The valve assembly (1) of any of the preceding claims, wherein the at least one locking tab (24) comprises an annular row of two or more locking tabs (24), circumferentially distant from each other.

8. The valve assembly (1) of any of the preceding claims, wherein the valve obturator (2) comprises a central channel (25) extending from the abutment surface (23) to at least one peripheral aperture (26).

9. The valve assembly (1) of any of the preceding claims, wherein the valve obturator (2) is snapped in the valve holder (4).

10. The valve assembly (1) of any of the preceding claims, wherein the valve obturator (2) comprises at least one stopper (29) at one axial end thereof opposite the locking tab (24), the at least one stopper (29) abutting against a cantilevered ring (431) of the valve holder (4) as the valve obturator (2) is in the closed position.

11. The valve assembly (1) of the preceding claim, wherein the cantilevered ring (431) is tapered inwardly and applies a radial force on an external surface (28) of the valve obturator (2).

12. The valve assembly (1) of any of the preceding claims, wherein the valve obturator (2) comprises an annular external sealing rib (27).

13. A connecting kit (1, 60) comprising the valve assembly (1) of any of claims 1 to 12 and the nozzle head (60) configured to cooperate with the valve obturator (2).

14. The connecting kit (1, 60) of claim 13, wherein the valve obturator (2) comprises a central channel (25) extending from the abutment surface (23) and the nozzle head (60) comprises a conduit (64), the central channel (25) and the conduit (64) having substantially a same diameter, the central channel (25) and the conduit (64) being aligned along the axis (A).

15. Method for operating the valve assembly according to any of the preceding claims, the method comprising:
providing a nozzle head in the vicinity of a valve assembly;
performing a relative displacement between the nozzle head and the valve holder so as to make the nozzle head enter the housing of the valve assembly and make a leak tight connection between the nozzle head and the valve obturator;
performing a further relative displacement so that the nozzle head pushes on the abutment surface of the valve assembly or the abutment surface of the valve assembly pushes on the nozzle head, until the valve obturator is moved into the open position; and
dispensing a fluid from a first device comprising or attached to the valve holder, to the nozzle head through a central channel of the valve obturator and through a conduit of the nozzle head; or dispensing a fluid from a second device comprising or attached to the nozzle head, to the first device through a conduit of the nozzle head and through a central channel of the valve obturator.

16. Method according to claim 15, further comprising:
interrupting dispensing a fluid by performing a relative displacement pulling the valve holder away from the nozzle head or vice versa, until the valve obturator reaches the closed position.
